# FASCICULE DE BREVET EUROPEEN

(11) **EP 3 839 450 B1**
(45) Date de publication et mention de la délivrance du brevet: **29.03.2023**
(21) Numéro de dépôt: 20209674.9
(22) Date de dépôt: 25.11.2020
(51) Int. Cl.: G01H 1/00, G06K 9/00

(54) **PROCEDE ET DISPOSITIF D'ANALYSE DES VIBRATIONS D'UN ELEMENT**
VERFAHREN UND VORRICHTUNG ZUR ANALYSE DER SCHWINGUNGEN EINES ELEMENTS
METHOD AND DEVICE FOR ANALYSING THE VIBRATIONS OF A COMPONENT

(30) Priorité: 18.12.2019 FR 1914946
(43) Date de publication de la demande: 23.06.2021
(73) Titulaire: ArianeGroup SAS, 78130 Les Mureaux (FR)
(72) Inventeur: LE GONIDEC, Serge, 27207 VERNON (FR); WOZNIAK, Anne-Laure, 27207 VERNON (FR)
(74) Mandataire: Cabinet Beau de Loménie

(56) Documents cités:
- US-A1- 2012 035 885
- US-A1- 2014 324 739
- Ps: "HDBSCAN clustering and UMAP", , 22 août 2019 (2019-08-22), XP055723411, Extrait de l'Internet: URL:https://medium.com/@ps.deeplearning.tr aining/hdbscan-clustering-and-umap-visuali sation-f31e653f7218 [extrait le 2020-08-18]

## Description

### Arrière-plan de l'invention

La présente invention se situe dans le domaine de l'analyse des vibrations d'un élément, par exemple une structure mécanique ou un fluide. Elle trouve une application privilégiée mais non limitative pour détecter une anomalie dans le fonctionnement d'une turbomachine par une analyse vibratoire d'une structure de cette turbomachine.

Dans l'état actuel de la technique, il est usuel, après un essai moteur, par exemple de fusée ou d'avion, d'analyser les fréquences de vibration de certaines structures de la turbomachine, par exemple le carter, afin de détecter une éventuelle anomalie vibratoire, celle-ci pouvant par exemple traduire un comportement anormal de la turbomachine voire du moteur. Le cas échéant, la signature vibratoire peut être mise en relation avec des données de contexte, par exemple une température, une pression en entrée de la pompe ou une vitesse de rotation du moteur pour déterminer les causes de l'anomalie et statuer sur son acceptabilité.

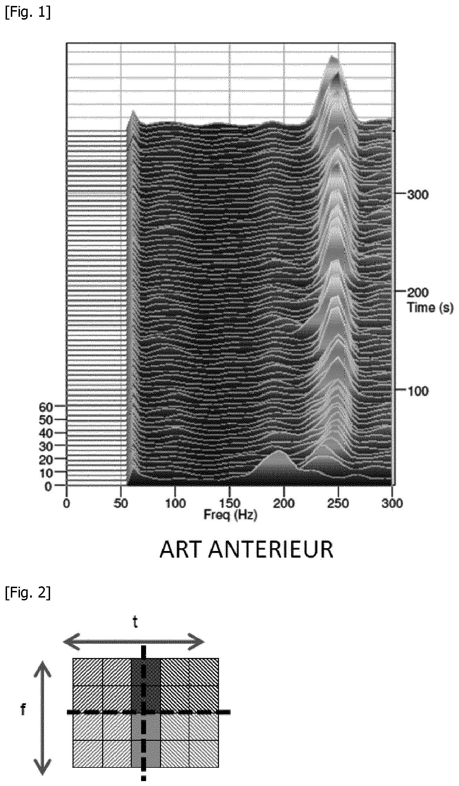

Le processus peut être le suivant : à partir des données de capteurs de vibration, un opérateur trace les spectres temps-fréquence associés, pendant toute la durée de l'essai. En fonction des phénomènes à observer, la fenêtre de fréquences considérée peut varier ; les fenêtres [0, 2 500 Hz] ou [0, 10 000 Hz]) peuvent par exemple être considérées. Chaque spectre, et comme représenté à la figure 1, peut présenter des « raies » correspondant à un pic de fréquence.

Un expert évalue alors la présence de ces raies, leur position dans le spectre (i.e. la fréquence d'apparition), leur amplitude et leur évolution dans le temps pour déterminer la présence d'une anomalie. L'expert prend en compte les données contextuelles (température, pression en entrée de la pompe, vitesse de rotation du moteur ou autres) pour analyser la signature du signal vibratoire.

Une méthode d'analyse conforme à cet état de la technique est décrite dans le document FR2953289 A1 de la Demanderesse.

Un objectif de l'invention est d'automatiser un tel processus de détection d'anomalie.

Une solution envisagée à cet effet consiste à générer des spectres temps-fréquence du type de ceux de la figure 1 pour différents essais puis à comparer ces spectres.

Mais cette opération de comparaison est difficile à mettre en oeuvre car elle nécessite de caler les différents essais sur une échelle commune qui peut être une échelle de temps. Une solution alternative consistant à normaliser par un élément de contexte les différentes amplitudes de spectre peut ne pas être satisfaisante.
Le document US 2014/0324739 divulgue un dispositif de détection et de contrôle d'anomalies à partir de données enregistrées par des capteurs et analysées de manière à détecter des anomalies de fonctions d'une machine.

La présente invention vise une méthode de détection d'anomalie qui ne présente pas de tels inconvénients.

### Objet et résumé de l'invention

Par conséquent, et selon un premier aspect, l'invention concerne un procédé d'analyse des vibrations d'un élément, ce procédé comportant :
- pour une pluralités d'essais, chacun étant effectué pendant une période d'observation:
   - l'obtention d'un signal vibratoire représentatif des vibrations de l'élément pendant la période d'observation, ce signal étant obtenu à partir d'un capteur configuré pour mesurer les fréquences de vibration de l'élément dans une plage de fréquences déterminée ;
   - l'obtention de données de contexte à au moins certains instants de la période d'observation, ces données de contexte étant obtenues à partir de capteurs associés à des composants ou à des mesures d'environnement dont l'état est susceptible d'influencer les vibrations de l'élément;
   - l'obtention d'une structure de données pour ledit essai, cette structure de données associant, pour au moins certains instants de la période d'observation, les composantes fréquentielles du signal représentatif des vibrations de la structure à ces instants avec les données de contexte à ces instants ; et
- une étape de classification des essais par comparaison de leurs structures de données.

Corrélativement, l'invention concerne un dispositif d'analyse des vibrations d'un élément, ce dispositif comportant :
- une unité d'obtention d'un signal vibratoire représentatif des vibrations de l'élément pendant un essai durant une période d'observation, ce signal étant obtenu à partir d'un capteur configuré pour mesurer les fréquences de vibration de l'élément dans une plage de fréquences déterminée ;
- une unité d'obtention de données de contexte à au moins certains instants de la période d'observation, ces données de contexte étant obtenues à partir de capteurs associés à des composants ou à des mesures d'environnement dont l'état est susceptible d'influencer les vibrations de l'élément ;
- une unité d'obtention d'une structure de données pour ledit essai qui associe, pour au moins certains instants de la période d'observation, les composantes fréquentielles du signal représentatif des vibrations dudit élément à ces instants avec les données de contexte à ces instants ;
- une unité de contrôle configurée pour contrôler l'unité d'obtention de signal vibratoire, l'unité d'obtention de données de contexte et l'unité de traitement de données pour obtenir une dite structure de données pour plusieurs essais; et
- une unité de classification des essais par comparaison de leurs structures de données.

Ainsi, et de façon fondamentale, l'invention propose d'utiliser les données de contexte comme axe d'observation en lieu et place de l'axe temporel. L'invention évite ainsi d'avoir à recaler les différents essais sur un même référentiel temporel pour les comparer.

Dit autrement, l'invention propose d'associer les données de contexte aux signaux vibratoires avant de les comparer plutôt que d'utiliser ces données de contexte a posteriori pour tenter d'expliquer une anomalie détectée par comparaison des signaux vibratoires dans un domaine temps-fréquence.

L'invention permet ainsi de comparer des essais de durées variables, sans normalisation, ces essais pouvant être de profils quelconques.

L'invention permet notamment de ce pas considérer certains essais comme anormaux à tort, par exemple des essais présentant une raie qui se décale dans le temps lorsqu'une donnée de contexte (par exemple la vitesse de rotation du moteur) est modifiée.

La méthode d'analyse selon l'invention permet de prendre en compte des essais de durées variables, et de localiser des anomalies aussi bien en temps qu'en fréquence.

L'élément vibratoire peut être de nature quelconque. Il peut notamment s'agir d'un fluide ou d'une structure mécanique.

Dans un mode de réalisation de l'invention, l'élément vibrant est le carter d'une turbomachine et les données de contexte sont une pression en entrée de la pompe et une vitesse de rotation du moteur.

La méthode d'analyse selon l'invention est générique à toute machine tournante.

Selon l'invention, l'obtention de ladite structure de données comporte :
- une étape de génération d'une matrice de T lignes et F colonnes, l'élément de ligne k et de colonne j de cette matrice ayant une valeur représentative des composantes fréquentielles du spectre du signal vibratoire VIB dans une plage temporelle [k.x.dt, (k+1).x.dt] pour l'intervalle fréquentiel [j.y.df, (j+1).y.df] ;
- une étape de génération d'un vecteur de T lignes, la valeur de l'élément de la ligne k de ce vecteur étant représentative de la donnée de contexte dans la plage temporelle [k.x.dt, (k+1).x.dt] ;
les paramètres x et y étant des constantes prédéfinies.

Le spectre temps-fréquence est ainsi découpé en blocs selon les axes temporel et fréquentiel. Il permet avantageusement de localiser une anomalie en temps et en fréquence.

Le choix des paramètres x et y permet de régler la taille des blocs dans les deux dimensions.

Dans un mode de réalisation de l'invention, la taille des blocs est modulable.

Dans un mode de réalisation de l'invention, les blocs se recouvrent ; ce mode de réalisation permet d'éviter de ne pas passer à côté d'une anomalie qui serait localisée en temps et/ou en fréquence à la frontière de deux blocs.

En notant dt et df les pas d'échantillonnage en temps et en fréquence, la Figure 2 illustre un découpage du spectre temps-fréquence de la figure 1 en blocs de 3dt avec un recouvrement d'1dt entre les blocs, et de 2df sans recouvrement.

Dans un mode particulier de mise en oeuvre de l'invention on choisit des blocs de 1 ou 2 dt ou df seulement.

Conformément à l'invention, le procédé d'analyse selon l'invention classifie les essais en comparant les structures de données obtenues pour ces essais.

L'invention peut utiliser une classification supervisée prédéfinie par des experts. Mais dans un mode préféré de réalisation de l'invention, la classification est non-supervisée. Autrement dit les différentes classes ne sont pas définies a priori ; cette caractéristique permet d'apporter un regard différent sur le problème de la détection d'anomalies vibratoires, par exemple dans les turbomachines.

Dans un mode de réalisation de l'invention, la classification est effectuée directement sur les structures de données telles que définies précédemment (matrice de blocs temps-fréquence et vecteur de données de contexte).

Dans un mode particulier de réalisation de l'invention, l'étape de classification comporte (i) une étape de réduction de ces structures de données en structures de données réduites et (ii) une partition des données réduites ainsi obtenues.

Dans un mode particulier de réalisation de l'invention, l'étape de réduction utilise l'algorithme PCA. Cet algorithme produit un résultat relativement simple à interpréter, chaque dimension de PCA étant associée à une direction de plus grande variance.

Dans un mode particulier de réalisation de l'invention, l'étape de réduction met en oeuvre un algorithme de type UMAP (Uniform Manifold Approximation and Projection for Dimension Réduction), particulièrement bien adapté aux structures de données complexes. Dans un mode particulier de réalisation de l'invention, les structures de données sont réduites dans un espace de dimension 2.

Dans un mode particulier de réalisation de l'invention, les structures de données réduites (ou de façon équivalente les essais associés à ces structures de données) sont partitionnées en utilisant un algorithme de type DBSCAN, par exemple HDBSCAN.

Dans un mode de réalisation, le procédé d'analyse selon l'invention comporte une phase d'apprentissage comportant la mise en oeuvre des étapes d'obtention de signal vibratoire, d'obtention de données de contexte, d'obtention d'une structure de données et de classification pour une pluralités d'essais considérés saine a priori.

Cette phase d'apprentissage permet d'obtenir des classes d'essais sains. Le résultat de la classification peut être analysé par un expert pour déterminer la pertinence des classes ainsi obtenues. L'homme du métier comprend qu'il est tout à fait possible de détecter une anomalie sur un essai considéré sain a priori en particulier si la structure de données obtenue pour cet essai ne peut être rapprochée des classes obtenues pour d'autres essais sains.

En variante, la phase d'apprentissage peut être mise en oeuvre d'une part sur des essais a priori sains et d'autre parts sur des essais présentant a priori des anomalies pour constituer des classes d'essais sains et des classes d'essais à problèmes.

Dans un mode particulier de réalisation, le procédé selon l'invention peut être entrainé progressivement en commençant l'apprentissage avec uniquement des essais sains ; lorsque l'expert détecte un essai à l'écart des autres, il peut choisir de le rapatrier dans la base des essais sains et recommencer l'apprentissage pour l'intégrer à une classe d'essais sains ou considérer l'essai comme présentant une anomalie et créer une nouvelle classe.

Le procédé d'analyse selon l'invention permet d'analyser un nouvel essai. Cette analyse comporte :
- la mise en oeuvre des étapes d'obtention de signal vibratoire, d'obtention de données de contexte et d'obtention d'une structure de données pour ce nouvel essai ; et
- une analyse permettant l'identification de l'occurrence d'au moins une anomalie vibratoire dans l'essai à analyser en comparant la structure de données obtenue pour l'essai à analyser avec le résultat de la classification effectuée pendant la phase d'apprentissage.

Dans un mode particulier de réalisation, les différentes étapes du procédé d'analyse sont déterminées par des instructions de programmes d'ordinateurs.

En conséquence, l'invention vise aussi un programme d'ordinateur sur un support d'informations, ce programme étant susceptible d'être mis en oeuvre dans un ordinateur, ce programme comportant des instructions adaptées à la mise en oeuvre des étapes d'analyse telle que présentée ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 déjà décrite représente un spectre temps-fréquence de l'art antérieur ;
[Fig. 2] la figure 2 déjà décrite illustre un découpage du spectre temps-fréquence de la figure 1 ;
[Fig. 3] la figure 3 représente une turbomachine et un dispositif d'analyse conforme à un mode particulier de réalisation de l'invention ;
[Fig. 4] la figure 4 représente l'architecture matérielle d'un dispositif d'analyse conforme à un mode particulier de réalisation de l'invention ;
[Fig. 5A] la figure 5A représente le spectre temps-fréquence d'un signal vibratoire et des données de contexte obtenues au cours d'une même période d'observation, dans un exemple de mise en oeuvre de l'invention ;
[Fig. 5B] la figure 5B représente une structure de données obtenue par la mise en oeuvre d'un mode particulier de réalisation de l'invention ;
[Fig. 6] la figure 6 représente dans un espace à deux dimensions des structures de données réduites conformes à un mode particulier de réalisation de l'invention ;
[Fig. 7] la figure 7 représente une classification d'essais pouvant être obtenue conformément à l'invention ; et
[Fig. 8] la figure 8 représente sous forme d'ordinogramme un procédé d'analyse conforme à un mode particulier de réalisation.

### Description détaillée de l'invention

La présente invention va maintenant être décrite dans un mode particulier de réalisation dans lequel l'élément vibratoire est une structure mécanique, plus précisément le carter d'une turbomachine.

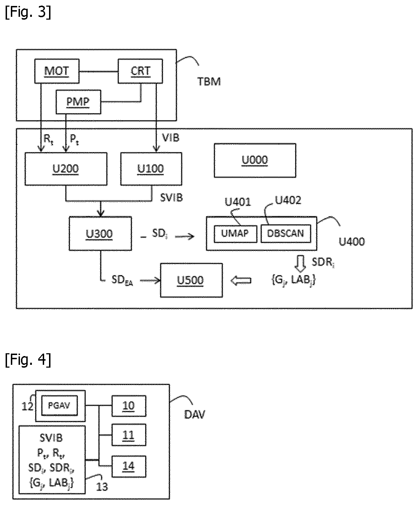

La figure 3 représente une turbomachine TBM et un dispositif d'analyse DAV conforme à un mode particulier de réalisation de l'invention.

Dans le mode de réalisation décrit ici, cette turbomachine TBM comportant un carter CRT, une pompe PMP et un MOT.

Le dispositif d'analyse DAV comporte une unité U100 configurée pour obtenir un signal représentatif des vibrations du carter CRT dans une plage de fréquences déterminée, ce signal étant par la suite appelé « signal vibratoire » SVIB. Ce module comporte un capteur non représenté, positionné sur le carter CRT. Dans le mode de réalisation décrit ici, et comme représenté à la figure 4, le signal SVIB est enregistré dans une mémoire non volatile 13 du dispositif d'analyse DAV.

Dans l'exemple décrit ici, l'état de la pompe PMP (typiquement la pression en entrée de la pompe) et l'état du moteur (vitesse de rotation) influencent les vibrations du carter CRT.

Dans le mode de réalisation décrit ici, le dispositif d'analyse DAV comporte une unité U200 configurée pour obtenir à un instant t, la pression Pₜ en entrée de la pompe PMP et la vitesse Rₜ de rotation du moteur MOT. Cette unité U200 comporte à cet effet des capteurs non représentés associés à la pompe et au moteur. Ces données Pₜ et Rₜ constituent des données de contexte au sens de l'invention. Dans le mode de réalisation décrit ici, ces données de contexte sont enregistrées dans la mémoire non volatile 13 du dispositif d'analyse DAV.

Dans le mode de réalisation décrit ici, le dispositif d'analyse DAV comporte une unité U000 de contrôle configurée pour contrôler les unités U100 d'obtention de signal vibratoire et U200 d'obtention de données de contexte de manière à acquérir un signal vibratoire et des données de contexte pendant une période d'observation définie par un opérateur, et à enregistrer ce signal et ces données dans la mémoire 13.

Le spectre temps-fréquence représentatif d'un signal vibratoire SVIB obtenu pendant une période d'observation est similaire à celui présenté à la figure 1.

Dans le mode de réalisation décrit ici, l'unité de contrôle U000 est également configurée pour contrôler une unité de traitement U300 configurée pour obtenir, à partir du signal vibratoire SVIB et des données de contexte Pₜ, Rₜ, une structure de données SDᵢ pour une période d'observation Pᵢ. Cette structure associe pour au moins certains instants t de la période d'observation Pi, les composantes fréquentielles du signal vibratoire SVIB avec les données de contexte Pₜ, Rₜ.

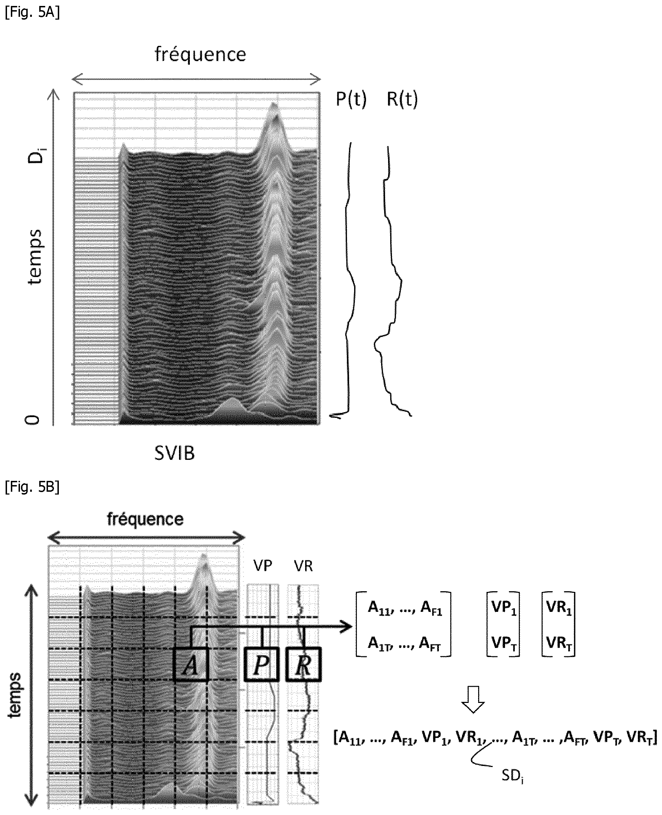

La figure 5A représente le spectre temps-fréquence du signal vibratoire SVIB obtenu pendant une période d'observation Pᵢ (similaire à celui de la figure 1) de durée Dᵢ, ainsi que des données de contexte (pression Pₜ en entrée de la pompe PMP et vitesse Rₜ de rotation du moteur MOT) obtenues au cours de cette même période d'observation de durée Dᵢ, calées sur l'échelle de temps du signal vibratoire SVIB.

Dans le mode de réalisation décrit ici, et comme représenté à la figure 5B, l'unité de traitement U300 est configurée pour :
- générer une matrice (A) de T lignes et F colonnes, l'élément de ligne k et de colonne j de cette matrice ayant une valeur représentative des composantes fréquentielles du spectre du signal vibratoire VIB dans une plage temporelle [k.x.dt, (k+1).x.dt] pour l'intervalle fréquentiel [j.y.df, (j+1).y.df] ;
- générer un vecteur VP de T lignes, l'élément de la ligne k de ce vecteur ayant pour valeur la pression Pₖ en entrée de la pompe PMP dans la plage temporelle [k.x.dt, (k+1).x.dt] ;
- générer un vecteur VR de T lignes, l'élément de la ligne k de ce vecteur ayant pour valeur la vitesse Rₖ de rotation du moteur MOT dans la plage temporelle [k.x.dt, (k+1).x.dt],
les paramètres x et y étant des constantes prédéfinies.

Dans le mode de réalisation décrit ici, l'unité de traitement de données U300 est configurée pour concaténer la matrice A, le vecteur VP et le vecteur VR et pour mettre à plat la matrice résultat de cette concaténation, de sorte à obtenir la structure de données SDᵢ représentée à la figure 5B.

Dans le mode de réalisation décrit ici, les structures de données SDᵢ obtenues pour plusieurs périodes d'observations Pᵢ sont enregistrées dans la mémoire non volatile 13.

Dans le mode de réalisation décrit ici, le dispositif d'analyse comporte une unité U400 configurée pour effectuer une classification des structures de données SDᵢ obtenues pour plusieurs périodes d'observations Pᵢ.

Dans le mode de réalisation décrit ici, les structures de données SDᵢ comportent (F+2).T composantes et l'unité U400 comporte un sous-module U401 de réduction apte réduire chacune de ces structures de données SDᵢ en une structure de données réduite SDRᵢ de dimension 2.

Dans l'exemple de réalisation décrit ici, ce sous-module U401 met en oeuvre l'algorithme UMAP.

On rappelle que l'algorithme UMAP est basé sur le graphe des plus proches voisins.

Le paramètre « n_neighbors » de l'algorithme UMAP permet de régler le nombre de voisins à considérer dans la construction d'un tel graphe. Pour une valeur petite de ce paramètre, l'algorithme se concentre sur la structure locale des données. Pour une valeur grande, sur la structure globale.

Dans un mode particulier de réalisation de l'invention, le paramètre « min_dist » de l'algorithme UMAP qui fixe la distance minimale entre deux points dans la représentation de dimension réduite est fixée à 0.0.

Dans le mode particulier de réalisation de l'invention décrit ici, le paramètre « n_component » de l'algorithme UMAP qui définit la dimension de l'espace réduit est fixé à 2.

Ces paramètres ne sont donnés qu'à titre d'exemple non limitatif.

Dans le mode de réalisation décrit ici, les structures de données réduites SDRᵢ obtenues pour les différentes périodes d'observations Pᵢ sont enregistrées dans la mémoire non volatile 13.

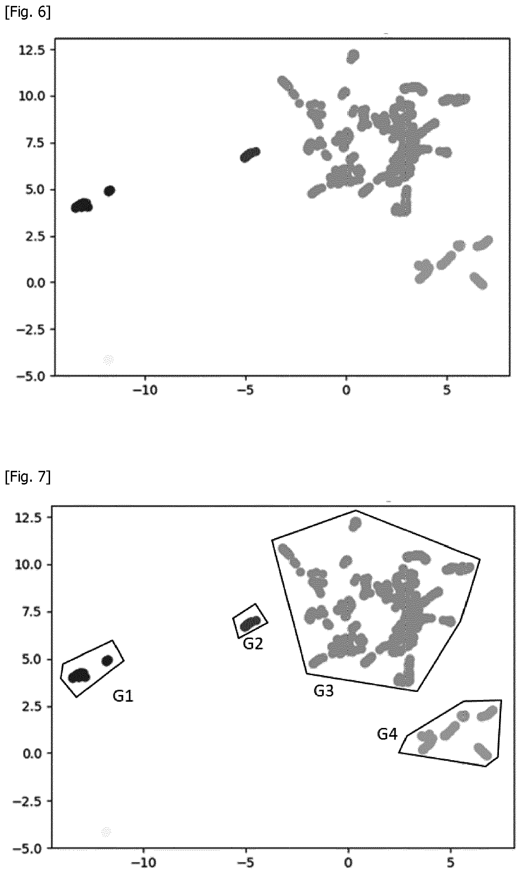

La figure 6 représente dans un plan, des structures de données réduites SDRᵢ de dimension 2 obtenues pour plusieurs essais.

Dans le mode de réalisation décrit ici, l'unité U400 de classification comporte un sous-module U402 de partitionnement (en anglais clustering) de l'ensemble des structures de données réduites SDRᵢ de dimension 2.

Dans l'exemple de réalisation décrit ici, ce sous-module U402 met en oeuvre l'algorithme DBSCAN (density-based spatial clustering of applications with noise). On rappelle que DBSCAN est un algorithme de partitionnement de données proposé en 1996 par Martin Ester, Hans-Peter Kriegel, Jörg Sander et Xiaowei Xu.

La figure 7 représente une partition en 4 groupes G1 à G4 obtenue à partir des structures de données réduites SDRᵢ de la figure 6.

Chaque groupe Gj peut ensuite être associé à un label LABj (« essai sain », « essai présentant une anomalie de type X », « essai présentant une anomalie de type Y », ...) par un expert. Dans le mode de réalisation décrit ici, les groupes Gj et leurs labels LABj sont enregistrés dans la mémoire non volatile 13.

Dans le mode de réalisation décrit ici, le dispositif d'analyse vibratoire comporte une unité U500 d'analyse configurée pour obtenir une structure de données SD_{EA} pour un essai à analyser et pour identifier l'occurrence d'au moins une anomalie vibratoire dans cet essai en comparant cette structure de données SD_{EA} avec les classes d'essais G1 à G4 obtenues pendant une phase d'apprentissage, comme expliqué maintenant.

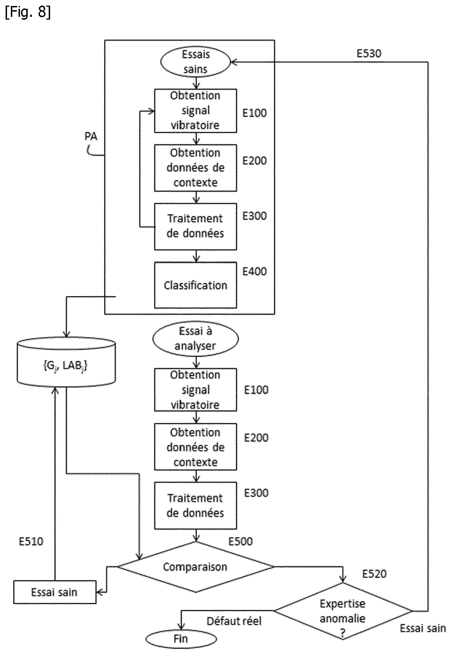

La figure 8 représente sous forme d'ordinogramme un procédé d'analyse des vibrations d'une structure mécanique conforme à l'invention.

Dans le mode de réalisation décrit ici, ce procédé comporte une phase d'apprentissage PA au cours de laquelle on effectue un certain nombre d'essais considérés sains de la turbomachine TBM.

Chaque essai consiste essentiellement à :
- obtenir, au cours d'une étape E100 un signal représentatif des vibrations de la structure pendant une période d'observation Pᵢ,
- obtenir, au cours d'une étape E200, des données de contexte à au moins certains instants de la période d'observation,
- obtenir, au cours d'une étape E300, une structure de données qui associe, pour au moins certains instants de ladite période d'observation, les composantes fréquentielles du signal représentatif des vibrations de la structure à ces instants avec les données de contexte aux mêmes instants.

Au cours de cette phase d'apprentissage, on effectue, au cours d'une étape E400, une étape de classification des essais réputés sains, par comparaison de leurs structures de données.

Le procédé d'analyse selon l'invention permet avantageusement d'analyser un nouvel essai dont on ne sait pas s'il est sain ou non.

Pour ce faire, on opère les étapes E100 à E300 pour cet essai à analyser de sorte à obtenir une structure de données conforme à l'invention pour cet essai.

Puis, au cours d'une étape E500 on compare la structure de données obtenue pour cet essai avec les classes obtenues pendant la phase d'apprentissage.

Si la structure de données obtenue pour l'essai à analyser est conforme à une classe d'essais sains, le nouvel essai est considéré sain, et ce nouvel essai est enregistré dans la base de données (étape E510). Sinon, un expert vérifie au cours d'une étape E520 si le nouvel essai présente effectivement une anomalie ou si, au contraire, il s'agit d'un essai sain qui échappe aux classes des essais sains identifiées jusqu'alors.

Si l'expert considère que ce nouvel essai présente effectivement une anomalie, autrement dit un défaut réel, le procédé s'arrête.

Si au contraire l'expert considère que ce nouvel essai est un essai sain, l'expert relance le procédé d'analyse (étape E530) en intégrant ce nouvel essai à la base de données des essais considérés sains pour générer une nouvelle classification.

La figure 4 représente l'architecture matérielle du dispositif d'analyse DAV de la figure 3.

Dans le mode de réalisation décrit ici, ce dispositif d'analyse a l'architecture d'un ordinateur. Il comporte notamment un processeur 10, une mémoire vive de type RAM 11, une mémoire morte de type ROM 12, une mémoire non volatile réinscriptible de type FLASH 13 et une interface homme-machine 14 comportant notamment des moyens d'entrée (clavier, souris, ...) et des moyens de sortie (écran, ...).

La mémoire morte 12 constitue un support d'enregistrement conforme à l'invention. Elle comporte un programme d'ordinateur PGAV conforme à l'invention.

Dans le mode de réalisation décrit ici, la mémoire non volatile réinscriptible 13 comporte :
- un enregistrement du signal vibratoire SVIB ;
- des données de contexte Pt et Rt ;
- des structures de données SDi et des structures de données réduites SDRᵢ
- des groupes d'essais Gj issus de la classification et leurs labels LABj.

## Revendications

1. Procédé d'analyse des vibrations d'un élément, ce procédé comportant,
- pour une pluralités d'essais, chacun étant effectué pendant une période d'observation:
- l'obtention (E100) d'un signal vibratoire représentatif des vibrations dudit élément pendant ladite période d'observation, ledit signal étant obtenu à partir d'un capteur configuré pour mesurer les fréquences de vibration dudit élément dans une plage de fréquences déterminée ;
- l'obtention (E200) de données de contexte à au moins certains instants de ladite période d'observation, lesdites données de contexte étant obtenues à partir de capteurs associés à des composants ou à des mesure d'environnement dont l'état est susceptible d'influencer les vibrations dudit élément ;
- l'obtention (E300) d'une structure de données (SDᵢ) pour ledit essai, ladite structure de données associant, pour au moins certains instants de ladite période d'observation, les composantes fréquentielles du signal représentatif des vibrations dudit élément auxdits instants avec lesdites données de contexte auxdits instants ; et
- une étape (E400) de classification desdits essais par comparaison de leurs structures de données, procédé étant **caractérisé en ce que**
l'obtention (E300) de ladite structure de données (SDᵢ) comporte :
- une étape de génération d'une matrice (A) de T lignes et F colonnes, l'élément de ligne k et de colonne j de cette matrice ayant une valeur représentative des composantes fréquentielles du spectre du signal vibratoire VIB dans une plage temporelle [k.x.dt, (k+1).x.dt] pour l'intervalle fréquentiel [j.y.df, (j+1).y.df] ;
- une étape de génération d'un vecteur VP de T lignes, la valeur de l'élément de la ligne k de ce vecteur étant représentative de la donnée de contexte dans la plage temporelle [k.x.dt, (k+1).x.dt] ; les paramètres x et y étant des constantes prédéfinies.

2. Procédé d'analyse selon la revendication 1, dans lequel ledit élément est une structure mécanique comprise dans une turbomachine (TBM).

3. Procédé d'analyse selon la revendication 1 ou 2, ce procédé comportant:
- une phase d'apprentissage (PA) comportant la mise en oeuvre desdites étapes (E100) d'obtention de signal vibratoire, (E200) d'obtention de données de contexte, (E300) d'obtention d'une structure de données et (E400) de classification pour une pluralités d'essais opérés considérés sains a priori.

4. Procédé d'analyse selon la revendication 3, ce procédé comportant:
- la mise en oeuvre desdites étapes (E100) d'obtention de signal vibratoire, (E200) d'obtention de données de contexte et (E300) d'obtention d'une structure de données pour un essai à analyser ; et
- une analyse (E500) permettant l'identification de l'occurrence d'au moins une anomalie vibratoire dans ledit essai à analyser en comparant la structure de données obtenue pour l'essai à analyser avec des classes d'essais obtenues (E400) pendant la phase d'apprentissage.

5. Procédé d'analyse selon l'une quelconque des revendications 1 à 4, dans lequel ladite étape de classification (E400) est non-supervisée.

6. Procédé d'analyse selon l'une quelconque des revendications 1 à 4, dans lequel ladite étape de classification (E400) est supervisée.

7. Procédé d'analyse selon la revendication 1 à 6, dans lequel ladite étape de classification comporte une étape de réduction desdites structures de données (SDi) en structures de données réduites (SDRi) et une étape de partition desdites données réduites (SDRi).

8. Procédé d'analyse selon la revendication 7, dans lequel ladite étape de réduction met en oeuvre un algorithme de type UMAP.

9. Procédé d'analyse selon la revendication 7 ou 8, dans lequel ladite étape de partition met en oeuvre un algorithme de type DBSCAN.

10. Dispositif (DAV) d'analyse des vibrations d'un élément (STR), ce dispositif comportant :
- une unité (U100) d'obtention d'un signal vibratoire représentatif des vibrations dudit élément pendant un essai durant une période d'observation, ledit signal étant obtenu à partir d'un capteur configuré pour mesurer les fréquences de vibration dudit élément dans une plage de fréquences déterminée ;
- une unité (U200) d'obtention de données de contexte à au moins certains instants de ladite période d'observation, lesdites données de contexte étant obtenues à partir de capteurs associés à des composants ou à des mesures d'environnement dont l'état est susceptible d'influencer les vibrations dudit élément ;
- une unité (U300) d'obtention d'une structure de données pour ledit essai qui associe, pour au moins certains instants de ladite période d'observation, les composantes fréquentielles du signal représentatif des vibrations dudit élément auxdits instants avec lesdites données de contexte auxdits instants ;
- une unité (U000) de contrôle configurée pour contrôler l'unité d'obtention de signal vibratoire, l'unité d'obtention de données de contexte et l'unité de traitement de données pour obtenir une dite structure de données pour plusieurs essais;
- une unité (U400) de classification desdits essais par comparaison de leurs structures de données,
**caractérisé en ce que**
l'unité (U300) d'obtention (E300) de ladite structure de données (SDᵢ) est configurée pour:
- générer une matrice (A) de T lignes et F colonnes, l'élément de ligne k et de colonne j de cette matrice ayant une valeur représentative des composantes fréquentielles du spectre du signal vibratoire VIB dans une plage temporelle [k.x.dt, (k+1).x.dt] pour l'intervalle fréquentiel [j.y.df, (j+1).y.df] ;
- générer un vecteur VP de T lignes, la valeur de l'élément de la ligne k de ce vecteur étant représentative de la donnée de contexte dans la plage temporelle [k.x.dt, (k+1).x.dt] ;
les paramètres x et y étant des constantes prédéfinies.

11. Dispositif (DAV) selon la revendication 10, comportant en outre une unité (U500) d'analyse configurée pour obtenir une dite structure de données (SDᵢ) pour un essai à analyser et pour identifier l'occurrence d'au moins une anomalie vibratoire dans ledit essai à analyser en comparant ladite structure de données avec des classes d'essais obtenues pendant une phase d'apprentissage.

12. Programme d'ordinateur (PGAV) comportant des instructions pour l'exécution des étapes du procédé d'analyse selon l'une quelconque des revendications 1 à 8 lorsque ledit programme est exécuté par un ordinateur.

## Patentansprüche

1. Verfahren zur Analyse der Schwingungen eines Bauteils, wobei dieses Verfahren aufweist,
- für eine Vielzahl von Tests, wobei jeder während einer Beobachtungsperiode durchgeführt wird:
- das Erhalten (E100) eines Schwingungssignals, das für die Schwingungen des Bauteils während der Beobachtungsperiode repräsentativ ist, wobei das Signal von einem Sensor erhalten wird, der ausgelegt ist, um die Schwingungsfrequenzen des Bauteils in einem bestimmten Frequenzbereich zu messen;
- das Erhalten (E200) von Kontextdaten zu mindestens einigen Zeitpunkten der Beobachtungsperiode, wobei die Kontextdaten von Sensoren erhalten werden, die Komponenten oder Umweltmessungen zugeordnet sind, deren Zustand die Schwingungen des Bauteils beeinflussen könnte;
- das Erhalten (E300) einer Datenstruktur (SDᵢ) für den Test, wobei die Datenstruktur für mindestens einige Zeitpunkte der Beobachtungsperiode die Frequenzkomponenten des für die Schwingungen des Bauteils repräsentativen Signals zu den Zeitpunkten mit den Kontextdaten zu den Zeitpunkten verbindet; und
- einen Schritt (E400) des Klassifizierens der Tests durch Vergleichen ihrer Datenstrukturen,
wobei das Verfahren **dadurch gekennzeichnet ist, dass** das Erhalten (E300) der Datenstruktur (SDᵢ) aufweist:
- einen Schritt des Erzeugens eines Felds (A) mit T Reihen und F Spalten, wobei das Bauteil der Reihe k und der Spalte j dieses Felds einen Wert hat, der für die Frequenzkomponenten des Spektrums des Schwingungssignals VIB in einem Zeitbereich [k.x.dt, (k+1).x.dt] für das Frequenzintervall [j.y.df, (j+1).y.df] repräsentativ ist;
- einen Schritt des Erzeugens eines Vektors VP mit T Reihen, wobei der Wert des Bauteils der Reihe k dieses Vektors für den Kontextdatenwert im Zeitbereich [k.x.dt, (k+1).x.dt] repräsentativ ist;
wobei die Parameter x und y vorbestimmte Konstanten sind.

2. Analyseverfahren nach Anspruch 1, wobei das Bauteil eine mechanische Struktur ist, die in einer Turbomaschine (TBM) liegt.

3. Analyseverfahren nach Anspruch 1 oder 2, wobei dieses Verfahren aufweist:
- eine Lernphase (PA), die die Durchführung der Schritte (E100) des Erhaltens eines Schwingungssignals, (E200) des Erhaltens von Kontextdaten, (E300) des Erhaltens einer Datenstruktur und (E400) des Klassifizierens für eine Vielzahl durchgeführter Tests aufweist, die apriorisch als einwandfrei betrachtet werden.

4. Analyseverfahren nach Anspruch 3, wobei dieses Verfahren aufweist:
- die Durchführung der Schritte (E100) des Erhaltens eines Schwingungssignals, (E200) des Erhaltens von Kontextdaten und (E300) des Erhaltens einer Datenstruktur für einen zu analysierenden Test; und
- eine Analyse (E500), die die Identifikation des Vorkommens mindestens einer Schwingungsanomalie in dem zu analysierenden Test durch Vergleichen der für den zu analysierenden Test erhaltenen Datenstruktur mit während der Lernphase erhaltenen Testklassen (E400) erlaubt.

5. Analyseverfahren nach einem der Ansprüche 1 bis 4, wobei der Schritt des Klassifizierens (E400) nicht überwacht ist.

6. Analyseverfahren nach einem der Ansprüche 1 bis 4, wobei der Schritt des Klassifizierens (E400) überwacht ist.

7. Analyseverfahren nach Anspruch 1 bis 6, wobei der Schritt des Klassifizierens einen Schritt des Reduzierens der Datenstrukturen (SDi) in reduzierte Datenstrukturen (SDRi) und einen Partitionsschritt der reduzierten Daten (SDRi) aufweist.

8. Analyseverfahren nach Anspruch 7, wobei der Schritt des Reduzierens einen Algorithmus vom Typ UMAP anwendet.

9. Analyseverfahren nach Anspruch 7 oder 8, wobei der Partitionsschritt einen Algorithmus vom Typ DBSCAN anwendet.

10. Vorrichtung (DAV) zur Analyse der Schwingungen eines Bauteils (STR), wobei diese Vorrichtung aufweist:
- eine Einheit (U100) zum Erhalten eines Schwingungssignals, das für die Schwingungen des Bauteils während eines Tests während einer Beobachtungsperiode repräsentativ ist, wobei das Signal von einem Sensor erhalten wird, der ausgelegt ist, um die Schwingungsfrequenzen des Bauteils in einem bestimmten Frequenzbereich zu messen;
- eine Einheit (U200) zum Erhalten von Kontextdaten zu mindestens einigen Zeitpunkten der Beobachtungsperiode, wobei die Kontextdaten von Sensoren erhalten werden, die Komponenten oder Umweltmessungen zugeordnet sind, deren Zustand die Schwingungen des Bauteils beeinflussen könnte;
- eine Einheit (U300) zum Erhalten einer Datenstruktur für den Test, die für mindestens einige Zeitpunkte der Beobachtungsperiode die Frequenzkomponenten des für die Schwingungen des Bauteils repräsentativen Signals zu den Zeitpunkten mit den Kontextdaten zu den Zeitpunkten verbindet;
- eine Steuereinheit (U000), die ausgelegt ist, um die Einheit zum Erhalten eines Schwingungssignals, die Einheit zum Erhalten von Kontextdaten und die Einheit zur Verarbeitung von Daten zum Erhalten einer Datenstruktur für mehrere Tests zu steuern;
- eine Einheit (U400) zum Klassifizieren der Tests durch Vergleichen ihrer Datenstrukturen,
**dadurch gekennzeichnet, dass** die Einheit (U300) zum Erhalten (E300) der Datenstruktur (SDᵢ) ausgelegt ist, um:
- ein Feld (A) mit T Reihen und F Spalten zu erzeugen, wobei das Bauteil der Reihe k und der Spalte j dieses Felds einen Wert hat, der für die Frequenzkomponenten des Spektrums des Schwingungssignals VIB in einem Zeitbereich [k.x.dt, (k+1).x.dt] für das Frequenzintervall [j.y.df, (j+1).y.df] repräsentativ ist;
- einen Vektor VP mit T Reihen zu erzeugen, wobei der Wert des Bauteils der Reihe k dieses Vektors für den Kontextdatenwert im Zeitbereich [k.x.dt, (k+1).x.dt] repräsentativ ist;
wobei die Parameter x und y vorbestimmte Konstanten sind.

11. Vorrichtung (DAV) nach Anspruch 10, die ferner eine Analyseeinheit (U500) aufweist, die ausgelegt ist, um eine Datenstruktur (SDᵢ) für einen zu analysierenden Test zu erhalten und um das Vorkommen mindestens einer Schwingungsanomalie in dem zu analysierenden Test durch Vergleichen der Datenstruktur mit während der Lernphase erhaltenen Testklassen (E400) zu identifizieren.

12. Rechnerprogramm (PGAV), das Befehle für die Ausführung der Schritte des Analyseverfahrens nach einem der Ansprüche 1 bis 8 aufweist, wenn das Programm von einem Rechner ausgeführt wird.

## Claims

1. A method for analyzing the vibrations of an element, this method including:
- for a plurality of tests, each being carried out during an observation period:
- obtaining (E100) a vibratory signal representative of the vibrations of said element during said observation period, said signal being obtained from a sensor configured to measure the vibration frequencies of said element in a determined frequency range;
- obtaining (E200) context data at least at certain moments of said observation period, said context data being obtained from sensors associated with components or with environmental measurements whose state is likely to influence the vibrations of said element;
- obtaining (E300) a data structure (SDᵢ) for said test, said data structure associating, for at least certain moments of said observation period, the frequency components of the signal representative of the vibrations of said element at said moments with said context data at said moments; and
- a step (E400) of classifying said tests by comparing their data structures,
the method being **characterized in that** obtaining (E300) said data structure (SDᵢ) includes:
- a step of generating a matrix (A) of T rows and F columns, the row k and column j element of this matrix having a value representative of the frequency components of the spectrum of the vibratory signal VIB in a time range [k.x.dt, (k+1).x.dt] for the frequency interval [j.y.df, (j+1).y.df];
- a step of generating a vector VP of T rows, the value of the element of the row k of this vector being representative of the context data in the time range [k.x.dt, (k+1).x.dt]; the parameters x and y being predefined constants.

2. The analysis method according to claim 1, wherein said element is a mechanical structure comprised in a turbomachine (TBM).

3. The analysis method according to claim 1 or 2, this method including:
- a learning phase (PA) including the implementation of said step (E100) of obtaining a vibratory signal, step (E200) of obtaining context data, step (E300) of obtaining a data structure and classification step (E400) for a plurality of performed tests considered sound a priori.

4. The analysis method according to claim 3, this method including:
- the implementation of said step (E100) of obtaining a vibratory signal, step (E200) of obtaining context data and step (E300) of obtaining a data structure for a test to be analyzed; and
- an analysis (E500) allowing the identification of the occurrence of at least one vibratory anomaly in said test to be analyzed by comparing the data structure obtained for the test to be analyzed with classes of tests obtained (E400) during the learning phase.

5. The analysis method according to any one of claims 1 to 4, wherein said classification step (E400) is unsupervised.

6. The analysis method according to any one of claims 1 to 4, wherein said classification step (E400) is supervised.

7. The analysis method according to claim 1 to 6, wherein said classification step includes a step of reducing said data structures (SDᵢ) into reduced data structures (SDRᵢ) and a step of partitioning said reduced data (SDRᵢ).

8. The analysis method according to claim 7, wherein said reduction step implements a UMAP type algorithm.

9. The analysis method according to claim 7 or 8, wherein said partition step implements a DBSCAN type algorithm.

10. A device (DAV) for analyzing the vibrations of an element (STR), this device including:
- a unit (U100) for obtaining a vibratory signal representative of the vibrations of said element during a test during an observation period, said signal being obtained from a sensor configured to measure the vibration frequencies of said element in a determined frequency range;
- a unit (U200) for obtaining context data at least at certain moments of said observation period, said context data being obtained from sensors associated with components or with environmental measurements whose state is likely to influence the vibrations of said element;
- a unit (U300) for obtaining a data structure for said test which associates, for at least certain moments of said observation period, the frequency components of the signal representative of the vibrations of said element at said moments with said context data at said moments;
- a control unit (U000) configured to control the vibratory signal obtaining unit, the context data obtaining unit and the data processing unit to obtain one said data structure for several tests;
- a unit (U400) for classifying said tests by comparing their data structures,
**characterized in that**
the unit (U300) for obtaining (E300) said data structure (SDi) is configured to:
- generate a matrix (A) of T rows and F columns, the row k and column j element of this matrix having a value representative of the frequency components of the spectrum of the vibratory signal VIB in a time range [k.x.dt, (k+1).x.dt] for the frequency interval [j.y.df, (j+1).y.df];
- generate a vector VP of T rows, the value of the element of the row k of this vector being representative of the context data in the time range [k.x.dt, (k+1).x.dt]; the parameters x and y being predefined constants.

11. The device (DAV) according to claim 10, further including an analysis unit (U500) configured to obtain one said data structure (SDᵢ) for a test to be analyzed and to identify the occurrence of at least one vibratory anomaly in said test to be analyzed by comparing said data structure with classes of tests obtained during a learning phase.

12. A computer program (PGAV) including instructions for executing the steps of the analysis method according to any one of claims 1 to 8 when said program is executed by a computer.
